(19) Europäisches Patentamt / European Patent Office / Office européen des brevets

(11) **EP 1 624 356 B1**

(12) **EUROPÄISCHE PATENTSCHRIFT**

(45) Veröffentlichungstag und Bekanntmachung des Hinweises auf die Patenterteilung:
**14.02.2007 Patentblatt 2007/07**

(51) Int Cl.:
*G05D 22/02* (2006.01)    *F24F 6/10* (2006.01)

(21) Anmeldenummer: **05015828.6**

(22) Anmeldetag: **21.07.2005**

(54) **Vorrichtung zur Erzeugung von Referenzfeuchten**

Apparatus for producing relative humidity references

Appareil pour générer des références d'humidité relative

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **04.08.2004 DE 102004038020**

(43) Veröffentlichungstag der Anmeldung:
**08.02.2006 Patentblatt 2006/06**

(73) Patentinhaber: **E + E ELEKTRONIK GESELLSCHAFT M.B.H.**
**4209 Engerwitzdorf (AT)**

(72) Erfinder: **Mitter, Helmut, Dr.**
**4202 Hellmonsödt (AT)**

(74) Vertreter: **Hofmann, Ernst**
**Dr. Johannes Heidenhain GmbH,**
**Patentabteilung,**
**Postfach 12 60**
**83292 Traunreut (DE)**

(56) Entgegenhaltungen:
US-A- 4 618 462          US-A1- 2002 121 103
US-B1- 6 299 147

- **S. HASEGAWA, J.W. LITTLE: "The NBS Two-pressure Humidity Generator, Mark 2" JOURNAL OF RESEARCH OF THE NATIONAL BUREAU OF STANDARDS, Bd. 81a, Nr. 1, 1. Januar 1977 (1977-01-01), Seiten 81-88, XP009055749**
- **DR. G. SCHOLZ: "A Standard Calibrator For Air Hygrometer" BULLETIN OIML, Nr. 97, 1. Dezember 1984 (1984-12-01), Seiten 18-27, XP009055755**

**Beschreibung**

Die vorliegende Erfindung betrifft eine Vorrichtung zur Erzeugung von Referenzfeuchten.

Zur Kalibration von Feuchtemessgeräten (z.B. Tauspiegelhygrometer zur Messung der Taupunkttemperatur oder Hygrometer zur Messung der relativen Feuchte) sind derzeit zwei grundsätzlich verschiedene Verfahren bekannt:

Vergleichsmethode

Hierbei wird eine Vorrichtung zur Erzeugung von Referenzfeuchten oder allgemein ein System genutzt, über welches Gas oder Luft mit einer vorbestimmten, möglichst stabilen relativen Feuchte oder Taupunkttemperatur erzeugt wird ("Feuchtedarstellung"). Zusätzlich ist ein Referenzmessgerät erforderlich, das die aktuelle Feuchte misst und dessen Anzeige mit dem Prüfling verglichen wird.

Für die Vergleichsmethode kommen im allgemeinen relativ einfache Systeme zur Feuchtedarstellung in Betracht, die lediglich eine ausreichende Stabilität gewährleisten müssen.

Referenzmethode

Bei diesem Verfahren benötigt man ebenfalls ein System bzw. eine Vorrichtung, das Gas oder Luft mit einer bestimmten Taupunkttemperatur oder einer bestimmten Referenzfeuchte erzeugt. Im Gegensatz zur Vergleichsmethode ist jedoch kein zusätzliches Referenzmessgerät erforderlich, sondern das System liefert die Feuchte oder Taupunkttemperatur mit einem bekannten Wert so hoher Genauigkeit (bzw. kleiner Unsicherheit) und Stabilität, dass kein zusätzliches Referenzmessgerät notwendig ist. Bei richtiger Auslegung des Systems wird die Stabilität und Genauigkeit der Feuchtedarstellung deutlich besser als bei bekannten Referenzmessgeräten sein.

Bei der Referenzmethode werden üblicherweise sogenannte 2-Druck/2-Temperatur-Feuchtegeneratoren als Vorrichtungen zur Erzeugung von Referenzfeuchten eingesetzt, wie sie etwa aus der EP 0 989 373 A2 oder der Veröffentlichung "The NBS Two Pressure Humidity Generator, Mark 2"; S. Hasegawa, J.W. Little, J.Res.Nat.Bur.Stand. 81A No.1, S. 81-88 (1977) bekannt sind. Deren Funktionsprinzip sei nachfolgend kurz erläutert.

Trockene Luft oder Stickstoff mit dem Druck $p_1$ wird hierbei über einen Druckregler durch ein Wasserbad in einer Sättigerkammer (Vorsättiger) mit der Temperatur $t_s$ geleitet. Als Ergebnis erhält man praktisch wasserdampfgesättigte Luft mit einer ungefähren Taupunkttemperatur $\sim t_s$ bei einem Druck $p_1$.

Die gesättigte Luft wird anschließend über eine geheizte Verbindungsleitung mit der Temperatur $t_{V1} > t_s$ in einen Kondensatkühler geleitet. Der Kondensatkühler ist in einem hochstabilen Flüssigkeitsbad temperaturstabilisiert und kühlt die einströmende Luft auf die Kondensatortemperatur $t_1$, wobei gleichzeitig das gesamte überschüssige Wasser als Kondensat anfällt. Als Ergebnis erhält man Luft beim Druck $p_1$ und der Temperatur $t_1$, die vollständig mit Wasserdampf gesättigt ist. Der Druck $p_1$ und die Temperatur $t_1$ werden direkt im Kondensatkühler gemessen.

Man erhält den Wasserdampfpartialdruck $e_w'$ $(t_1,p_1)$ der Luft im Kondensatkühler gemäß folgender Gleichung (1)

$$e_w{}'(t_1,p_1) = e_w(t_1)*f(p_1,t_1) \qquad \text{Gl. (1),}$$

wobei:

$e_w(t)$: Sättigungsdampfdruck von Wasser bei der Temperatur t in der reinen Phase nach Sonntag[1]
$f(p,t)$: Realgaskorrektur ("enhancement-Faktor") von Luft nach Hardy[2] und Greenspan[3]
$e_w'(p,t)$: Sättigungsdampfdruck des realen Systems bei Anwesenheit von Luft oder $N_2$

Die gesättigte Luft wird über eine geheizte Verbindungsleitung mit der Temperatur $t_{v2} > t_1$ aus dem Kondensatkühler abgeleitet, über ein geheiztes Nadelventil mit der Temperatur $t_p > t_{v2}$ auf den Druck $p_2$ entspannt und über eine geheizte Verbindungsleitung mit der Temperatur $t_{v3} > t_{v2}$ einem Verbraucher bzw. einer Messkammer zugeführt, wobei der Gasdruck $p_2$ in der Messkammer gemessen wird.

Der Wasserdampfpartialdruck e am Ort des Verbrauchers ergibt sich dann mit

$$e = \frac{p_2}{p_1} \cdot e_w{}'(p_1,t_1) \qquad \text{Gl. (2)}$$

und die Taupunkttemperatur $t_d$ aus Gleichung (3):

$$e = e_w{}'(p_2,t_d) \qquad \text{Gl. (3).}$$

Das System wird mit einem kontinuierlichen Gasstrom betrieben, wobei sich bei richtiger Konstruktion der Taupunkt $t_d$ des Gasstroms lediglich aus der Messung der beiden Drücke $p_1$ und $p_2$ und der Kondensatkühlertemperatur $t_1$ ergibt.

Durch Variation des Kondensatkühlerdrucks $p_1$ und der Kondensatkühlertemperatur $t_1$ lassen sich mit einem maximalen Druck von 9400 mbar und einer Temperatur $t_1 = 0.2°C$ minimale Taupunkttemperaturen von -27°C realisieren.

Umgekehrt kann bei einer Temperatur $t_1 =$ 100°C und einem Druck $p_1 = 1430$ mbar eine maximale Taupunkttemperatur von 90°C realisiert werden.

Durch anschließendes Einleiten des Gasstroms in eine Messkammer mit der Temperatur $t_2$ kann in dieser eine relative Feuchte $U_w$

$$U_w = \frac{e}{e'_w(p_2, t_2)} \cdot 100 \qquad \text{Gl. (4)}$$

erzeugt werden.

Für positive Temperaturen $t_1$ können auf diese Art minimale Taupunkttemperaturen bis etwa -27°C erreicht werden. Für tiefere Taupunkttemperaturen müsste man den Kondensatkühlerdruck $p_1$ wesentlich erhöhen ($p_1 = 100$ bar für $t_d \sim -50$ °C , $p_1 = 400$ bar für $t_d \sim -60$°C), was aber technischen Probleme bzgl. Festigkeit und Sicherheit. Entscheidend ist aber, dass der Gültigkeitsbereich der Funktionen von Sonntag[1], Hardy[2] und Greenspan[3] auf Grund der vorhandenen experimentellen und in der Literatur bekannten Messdaten auf Druckbereiche unter $p_1 = 20$ bar begrenzt ist

Für tiefe Taupunkttemperaturen erfolgt deshalb die Feuchtedarstellung nicht mehr bezüglich des Sättigungsdampfdrucks über Wasser sondern bezüglich Eis, was zu ähnlichen Funktionen führt. Üblicherweise wird die Feuchtedarstellung bzgl. Eis auf zwei bekannte Arten realisiert:

In einer ersten Variante sättigt man trockenes Gas über einer Eisschicht auf, wobei die Eisschicht z.B. als Eisbelag in Rohrwendeln ausgebildet ist, die auf einer Temperatur $t_1 < 0$°C stabilisiert werden. Hier hat man typischerweise die Schwierigkeit, eine entsprechende Eisschicht in den Rohrwendeln herzustellen. Ferner ist die Lebensdauer eines solchen Systems mit der Eismenge an den Rohrwänden begrenzt; allgemein können Probleme durch Strömungsverluste in den Rohrwendeln in Form von Druckverlusten auftreten, was wiederum zu signifikanten Messfehlern führen kann. Nach Ablauf der Standzeit der Eisschicht muß das System wieder aufgetaut werden und eine neue Belegung der Rohrwände mit Eis erfolgen.

In einer zweiten Variante wird aus feuchter Luft die überschüssige Feuchte durch Sublimation in einem Kondensator ausgeschieden. Man realisiert also im Wesentlichen das gleiche Verfahren wie bei einem Kondensatkühler, wobei im Unterschied hierzu jedoch Eis abgeschieden wird. Dieses Verfahren hat allerdings zwei wesentliche Nachteile.

So scheidet sich das Eis scheidet vorzugsweise eingangsseitig ab, was sehr schnell zum Zufrieren des Kondensatkühlers führt. Es resultieren recht schnell signifikante Druckverluste im Kondensatkühler, was wiederum zu entsprechenden Messfehlern führt. Ferner scheidet sich das Eis üblicherweise nicht als massive, glatte Eisschicht ab, sondern als Reif, der nur eine sehr geringe Festigkeit und mechanische Stabilität aufweist. Die dabei entstehenden Eisnadeln haben die Tendenz, im Gasstrom mitgerissen zu werden, was wiederum zu einer Fehldarstellung der Feuchte führt.

Bzgl. Feuchtedarstellungsverfahren mittels 2-Druck/2-Temperatur-Systemen gibt es verschiedene Varianten, die im Wesentlichen immer auf Vereinfachungen des Grundprinzips hinauslaufen. So können etwa die beiden Temperaturen $t_1$ und $t_2$ identisch sein und man erhält ein reines 2-Druck-System, bei dem die relative Feuchte lediglich über den Druck eingestellt wird. Werden hingegen die beiden Drücke $p_1$ und $p_2$ identisch gewählt, so erhält man für die Darstellung der relativen Feuchte ein 2-Temperatur-System. Im Falle einer Taupunktdarstellung wird ein derartiges System dann auch als 1-Druck-Generator bezeichnet, bei dem die Taupunktdarstellung lediglich über die Kondensatortemperatur erfolgt.

Die Systeme können - wie oben beschrieben - mit einem kontinuierlichem Gasstrom arbeiten. Es gibt aber auch Systeme (2-Temperatur-Generatoren bzw. 1-Druck-Generatoren), die mit einem zirkulierendem Gasstrom betrieben werden.

Unabhängig von der jeweiligen Ausführungsform basieren alle Varianten jedoch auf dem gleichen Grundprinzip. In allen Systemen kommt der Konstruktion des Kondensatkühlers bzw. Kondensators zwischen Sättiger und Verbraucher eine zentrale Bedeutung zu. Es existieren zwar für alle Taupunktbereiche Systeme, die mit hoher Genauigkeit arbeiten, üblicherweise benötigt man aber für unterschiedliche Taupunktbereiche völlig unterschiedliche Systeme, die noch dazu wesentliche Nachteile im Betrieb aufweisen können (Druckverlust, kurze Standzeiten, Begrenzung bei hohen Taupunkttemperaturen).

In Bezug auf den Kondensatkühler existieren nunmehr verschiedene bekannte Ausführungsformen.

So sind etwa Platten- oder Lamellenkondensatoren bekannt, bei denen der Gasstrom mäanderförmig aufwärts und abwärts in einem Plattenkondensator geführt wird, also i.w. senkrecht. Hierzu sei etwa auf die Veröffentlichung von A. Scholz, "A Standard Calibrator for Air Hygrometers", Bulletin OIML Nr. 97, Dez. 1984, S. 18 - 27 verwiesen. Das überschüssige Wasser scheidet sich bei derartigen Kondensatkühlern am Boden das Kondensators ab und muss relativ häufig entfernt werden, da ein zu hoher Wasserstand unmittelbar zu Druckverlusten und damit zu Messfehlern führt.

Ferner sind Kondensatkühler in Form von Rohrwendelkühlern bekannt. Der Gasstrom wird hierbei in einer Rohrwendel durch das Kühlmedium geleitet, wobei sich das überschüssige Wasser an den Rohrwänden abscheidet und in einen Wasserabscheider fließt. Dieser muss ebenfalls periodisch entleert werden.

Normalerweise kann man diese Kondensatorkonstruktionen nur für einen echten Kondensatbetrieb verwenden, für eine Feuchtedarstellung über Eis sind sie nur bedingt oder nur für sehr kurze Zeit geeignet, da sich das Eis sofort eingangsseitig abscheidet und den Kondensator verstopft.

Aufgabe der vorliegenden Erfindung ist es daher, eine Vorrichtung zur Erzeugung von Referenzfeuchten mit einem geeigneten Kondensatkühler anzugeben, die insbesondere für Feuchtedarstellungsverfahren bzgl. Eis und Wasser gleichermaßen gut geeignet ist.

Diese Aufgabe wird gelöst durch eine Vorrichtung mit den Merkmalen des Anspruches 1.

Vorteilhafte Ausführungsformen der erfindungsgemäßen Vorrichtung ergeben sich aus den Merkmalen der abhängigen Patentansprüche.

Erfindungsgemäß wird nunmehr in einer Vorrichtung zur Erzeugung von Referenzfeuchten mindestens ein Kondensatkühler eingesetzt, der als Lamellenkondensator ausgebildet ist und dessen Anordnung derart gewählt ist, dass eine im wesentlichen waagrechte Gasströmung durch denselben sichergestellt ist. Die oben erwähnten Probleme in Bezug auf die sich an den Lamellen abscheidende Flüssigkeit lassen sich hierbei vermeiden.

In einer vorteilhaften Ausführungsform umfasst der Kondensatkühler der erfindungsgemäßen Vorrichtung zwei in Serie geschaltete Teil-Kondensatkühler, die ähnlich ausgebildet sind und jeweils eine im wesentlichen waagrechte Gasströmung gewährleisten. Vorteilhafterweise sind beide Teil-Kondensatkühler hierbei übereinander angeordnet. Vorzugsweise ist vor dem ersten Teil-Kondensatkühler eingangsseitig ein Vorkondensator angeordnet, beispielsweise ausgebildet als abwärtslaufende Rohrwendel.

Ferner erweist sich als vorteilhaft, wenn zwischen den beiden Teil-Kondensatkühlern eine senkrechte Verbindungsleitung angeordnet ist, die im oberen Teil-Kondensatkühler einen definierten Kondensatüberlauf aufweist. Derart kann sichergestellt werden, dass stets ein bestimmter Kondensatstand im oberen Teil-Kondensatkühler verbleibt.

Vorzugsweise sind die Lamellen bzw. der Kondensatorblock aus Edelstahl oder einem anderen inerten Material gefertigt. Am Boden wird dieser Block durch einen Flansch abgedichtet, so dass die Dichtfuge immer durch das Kondensat bedeckt ist.

Aufgrund der erfindungsgemäßen Ausgestaltung der Vorrichtung zur Erzeugung von Referenzfeuchten lassen sich nunmehr mit einem System Taupunkttemperaturen im Bereich zwischen -60°C und 90°C realisieren. Die untere Grenze wird dabei lediglich von der erreichbaren Kondensatortemperatur $t_1$ und in der weiteren Folge durch den Gültigkeitsbereich der Referenzfunktionen bestimmt. Die obere Grenze ergibt sich einerseits aus dem Atmosphärendruck, sowie aus der maximalen Kühlleistung des Kondensators und wiederum aus der Gültigkeitsgrenze der Referenzfunktionen nach Sonntag[1], Hardy[2] und Greenspan[3].

Weitere Vorteile sowie Einzelheiten der vorliegenden Erfindung ergeben sich aus der nachfolgenden Beschreibung eines Ausführungsbeispiels anhand der beiliegenden Figuren.

Dabei zeigt

Figur 1       ein schematisierte Darstellung eines Ausführungsbeispiels der erfindungsgemäßen Vorrichtung;

Figur 2       eine Ansicht des Kondensatkühlers aus Figur 1;

Figur 3       eine Schnittansicht des Kondensatkühlers aus Figur 2;

Figur 4a, 4b   je eine Schnittansicht der Teil-Kondensatkühler aus Figur 2.

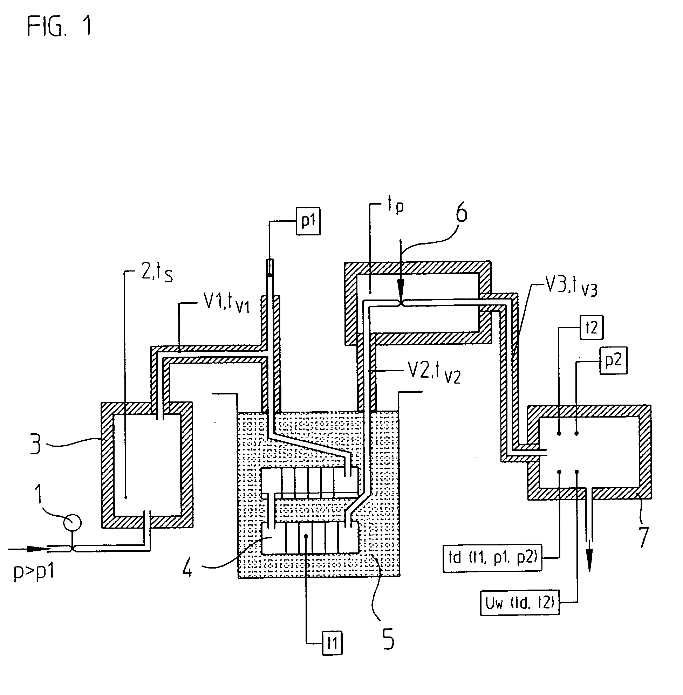

Anhand von Figur 1 sei zunächst der Gesamtaufbau der erfindungsgemäßen Vorrichtung zur Erzeugung von Referenzfeuchten erläutert, die im wesentlichen dem bereits oben erläuterten 2-Druck/2-Temperatur-Feuchtegenerator entspricht.

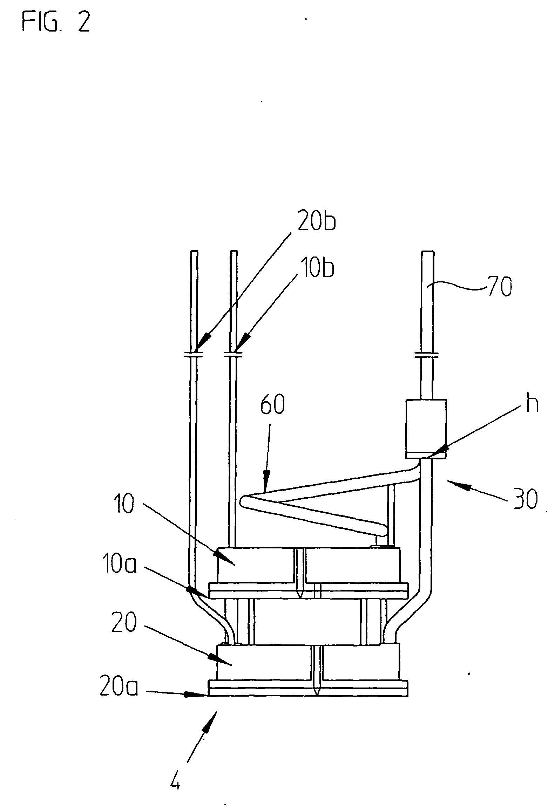

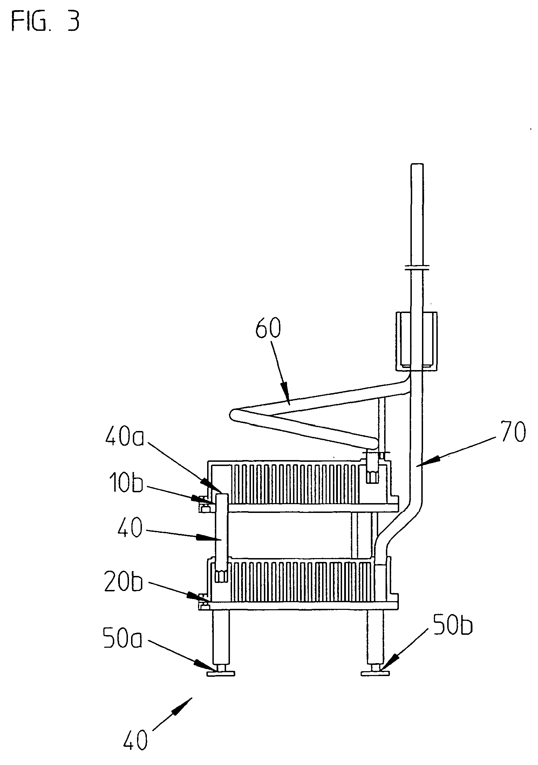

Trockene Luft oder Stickstoff mit dem Druck $p_1$ wird hierbei über einen Druckregeler 1 durch ein Wasserbad 2 in einen Sättiger bzw. eine Sättigerkammer 3 (Vorsättiger) mit der Temperatur $t_s$ geleitet. Als Ergebnis erhält man praktisch wasserdampfgesättigte Luft mit einer ungefähren Taupunkttemperatur $\sim t_s$ bei einem Druck $p_1$. Die gesättigte Luft wird anschließend über eine geheizte Verbindungsleitung V1 mit der Temperatur $t_{V1} > t_s$ in einen mehrstufigen Kondensatkühler 4 geleitet. Der Kondensatkühler 4 ist in einem hochstabilen Flüssigkeitsbad 5 temperaturstabilisiert angeordnet und kühlt die einströmende Luft auf die Kondensatortemperatur $t_1$, wobei gleichzeitig das gesamte überschüssige Wasser als Kondensat anfällt. Als Ergebnis erhält man Luft beim Druck $p_1$ und der Temperatur $t_1$, die vollständig mit Wasserdampf gesättigt ist. Der Druck $p_1$ und die Temperatur $t_1$ werden direkt im Kondensatkühler 4 gemessen. In vielen Fällen wird der Kondensatkühler oder Kondensator deshalb auch als "Sättiger" bezeichnet, da seine Hauptfunktion das Erzeugen von mit Wasserdampf gesättigter Luft ist. In diesem Fall wird der Sättiger in Form der Sättigerkammer 3 auch als "Vorsättiger " bezeichnet. In Bezug auf die maßgeblichen Maßnahmen auf Seiten des verwendeten Kondensatkühlers 4 sei auf die nachfolgenden Figuren 2, 3 und 4a, 4b verwiesen.

Die gesättigte Luft wird über eine geheizte Verbindungsleitung V2 anschließend mit der Temperatur $t_{v2} > t_1$ aus dem Kondensatkühler 4 abgeleitet, über ein geheiztes Nadelventil 6 mit der Temperatur $tp > t_{v2}$ auf den Druck $p_2$ entspannt und über eine geheizte Verbindungsleitung V3 mit der Temperatur $t_{V3} > t_{v2}$ einer Messkammer 7 zugeführt, wobei der Gasdruck $p_2$ am Ort der Messkammer 7 gemessen wird.

Der grundsätzliche Aufbau des Kondensatkühlers 4 der erfindungsgemäßen Vorrichtung sei nunmehr anhand der Figuren 2, 3 sowie 4a und 4b erläutert.

Der verwendete Kondensatkühler 4 dieses Ausführungsbeispiels umfasst hierbei zwei übereinander angeordnete Teil-Kondensatkühler 10, 20, die in Serie geschaltet sind und im Flüssigkeitsbad bis zur Höhe h eingetaucht und auf die Temperatur $t_1$ temperaturstabilisiert werden. Die Teil-Kondensatkühler 10, 20 sind als Platten- bzw. Lamellenkondensatoren ausgebildet und derart angeordnet, die Gasführung durch die Teil-Kondensatkühler 10, 20 jeweils mäanderförmig waagrecht erfolgt. Das Kondenswasser bzw. Kondensat scheidet sich an den Lamellen der Teil-Kondensatkühler 10, 20 ab und sammelt sich aufgrund der Schwerkraft am Boden des jeweiligen Teil-Kondensatkühlers 10, 20. Durch die waagrechte Gasführung bleibt der Querschnitt der Gasführung vom Stand des Kondensats weitgehend unbeeinflusst, was zu einem sehr geringen Strömungsverlust (Druckverlust) führt, der weitgehend unabhängig vom Kondensatstand ist. Messungen haben gezeigt, dass selbst bei einer Befüllung der Teil-Kondensatkühler 10, 20 zur Hälfte mit Kondensat noch keine messbare Veränderung des Druckverlustes auftritt.

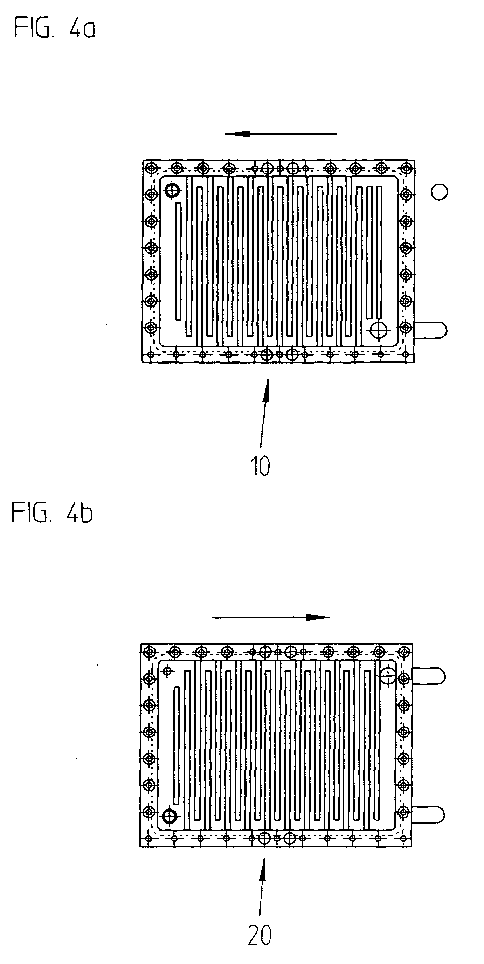

Eine Ansicht der beiden Teil-Kondensatkühler 10, 20 von unten zeigen die beiden Figuren 4a, 4b. Deutlich erkennbar sind hierbei zum einen die Lamellen, die eine mäanderförmige Gasführung im Inneren der beiden Teil-Kondensatkühler 10, 20 zur Folge haben. Zum anderen ist erkennbar, dass die flächigen Lamellen jeweils senkrecht zur Richtung der Gasströmung orientiert sind, die durch die beiden Pfeile in den Figuren angedeutet werden soll.

Im Gegensatz dazu führt bei einer senkrechten Gasführung - wie im Stand der Technik üblich - ein schon geringer Kondensatstand dazu, dass ein Teil der Lamellen des Kondensatkühlers vollständig im Kondensat eintaucht. Dies führt zu einer signifikanten Erhöhung des Druckverlustes und zu entsprechenden Fehlern.

Die erfindungsgemäße waagrechte Gasführung bietet darüberhinaus noch einen weiteren Vorteil. So können die Lamellen der Teil-Kondensatkühler 10, 20 jeweils aus einem einzigen Block aus rostfreiem Stahl oder einem anderen inerten Material gearbeitet werden, wobei die Abdichtung der Teil-Kondensatkühler 10, 20 über einen Deckel 10a, 20a am Boden des jeweiligen Teil-Kondensatkühlers 10, 20 erfolgt. Durch den Kondensatstand wird die jeweilige Dichtungsfuge 10b, 20b immer mit Wasser bedeckt, was den wesentlichen Vorteil hat, dass im Zuge der Gasführung die wasserdampfgesättigte Luft tatsächlich nur mit Wasser (Kondensat) und dem inerten Material des Kondensatorblocks und nicht mit Dichtmaterialien in Berührung kommt.

In einer alternativen Ausführungsform könnte die Gasführung in den Teil-Kondensatkühlern 10, 20 alternativ zur mäanderförmigen Gasführung auch spiralförmig erfolgen, stets jedoch waagrecht.

Alternativ zur Verwendung von Edelstahl wäre im übrigen auch der Einsatz von vernickeltem Messing für die Teil-Kondensatkühler 10, 20 möglich.

Ferner sei an dieser Stelle darauf hingewiesen, dass der zweistufige Kondensatkühleraufbau grundsätzlich nicht zwingend ist. Es wäre also auch eine Ausführungsform der erfindungsgemäßen Vorrichtung denkbar, die lediglich einen einzigen Lammellenkondensator mit waagrechter Gasführung umfasst.

Die beiden Teil-Kondensatkühler 10, 20 sind im dargestellten Ausführungsbeispiel mittels einer senkrecht angeordneten Verbindungsleitung 40 verbunden. Diese ist im oberen Teil-Kondensatkühler 10 gleichzeitig als Kondensatüberlauf 40a von Teil-Kondensatkühler 10 in Teil-Kondensatkühler 20 so ausgebildet, dass im oberen Teil-Kondensatkühler 10 immer ein Wasserstand von etwa 10 mm erhalten bleibt.

Die beiden Teil-Kondensatkühler 10, 20 stehen auf thermisch isolierenden Standfüßen 50a, 50b im Temperaturbad. In einer alternativen Ausführungsform könnten die beiden Teil-Kondensatkühler 10, 20 auch in das Temperaturbad gehängt werden.

Den beiden Teil-Kondensatkühlern 10, 20 ist desweiteren noch ein Vorkondensator 60 in Form einer Rohrwendel vorgeschaltet, der ebenfalls noch im temperaturstabilisierten Flüssigkeitsbad angeordnet ist. Es kann gezeigt werden, dass die wesentliche Energieabfuhr in der Gasströmung bereits im Vorkondensator bzw. in der Rohrwendel erfolgt und die beiden Teil-Kondensatkühler 10, 20 im wesentlichen nur noch zur präzisen Temperaturangleichung und vollständigen Aufsättigung der Luft dienen.

Durch die mehrstufige Konstruktion des vorliegenden Ausführungsbeispiels wird trotz des eigentlich schlecht wärmeleitenden Materials Edelstahl für die Teil-Kondensatkühler 10, 20 eine sehr gute Temperaturangleichung des durchströmenden Gases an die Badtemperatur erreicht, wobei praktisch kein Druckverlust erfolgt. Gleichzeitig kann eine sehr hohe Kühlleistung erzielt werden, was auch eine Taupunktdarstellung bis zu 90°C ermöglicht.

Durch Messungen konnte gezeigt werden, dass mit der in den Figuren 2, 3, 4a, 4b gezeigten Konstruktion eines Kondensatkühlers 4 bei einem Gasstrom von 5 l/min bis zu einer Kühlleistung von 250 W keine messbare Änderung der dargestellten Taupunkttemperatur auftritt. Dies reicht für eine Taupunktdarstellung bis 90°C mit folgenden Parametern aus:

$t_s$ = 106 °C (Sättiger bzw. Vorsättigertemperatur)
$t_1$ = 100 °C
$p_1$ = 1432 hPa
$p_2$ = 990 hPa
$t_{v1}$ = 111 °C (Temperatur der Verbindungsleitung in den Kondensatkühler)
P = 173 W (erforderliche Kühlleistung des Kondensators)

Die beiden Teil-Kondensatkühler 10, 20 bieten die Möglichkeit, über die Entleerungsleitungen 10b, 20b das Kondensat zu entfernen. Hierbei sind die die Entleerungsleitungen 10b, 20b so ausgelegt, dass immer ein Mindeststand an Kondensat verbleibt und der jeweilige Teil-Kondensatkühler 10, 20 nie vollkommen trocken wird. Die Entleerungsleitungen 10b, 20b sind aus Sicht des Gasstroms zwischen den beiden Teil-Kondensatkühlern 10, 20 platziert, wodurch eine Beeinflussung des dargestellten Taupunkts durch rücklaufendes Wasser in den Entleerungsleitungen 10b, 20b verhindert wird.

Zusätzlich könnten in alternativen Ausführungsformen noch weitere Entleerungsleitungen in benachbarter Position angeordnet werden, die konstruktiv so ausgelegt werden, dass eine vollständige Entleerung der Teil-Kondensatkühler möglich ist.

Ferner könnte in weiteren Ausführungsformen anstelle von Edelstahl auch vernickeltes Messing als Material der Teil-Kondensatkühler 10, 20 verwendet werden. Die mögliche Kühlleistung ließe sich aufgrund der noch besseren Wärmeleitung dieses Materials noch wesentlich erhöhen.

Nachfolgend sei nunmehr die Gasführung im Kondensatkühler 4 des dargestellten Ausführungsbeispiels im Detail anhand der Figren 1, 2, 3, 4a, 4b erläutert.

Vom Sättiger 3 mit der Temperatur $t_s$ kommt über die Verbindungsleitung V1 mit der Temperatur $t_{v1}$ ein weitgehend mit Wasserdampf gesättigter Gasstrom. An der Stelle 30 tritt der Gasstrom in den Vorkondensator 60 ein und wird bereits weitgehend auf die Badtemperatur $t_1$ abgekühlt. Dabei kondensiert das überschüssige Wasser aus dem Gasstrom aus und läuft in der Rohrwendel des Vorkondensators 60 mit dem Gasstrom in den ersten Teil-Kondensatkühler 10. Das Kondenswasser aus der Rohrwendel sammelt sich im Teil-Kondensatkühler 10 und verteilt sich gleichmäßig am Boden des Teil-Kondensatkühlers 10 bis zu maximalen Füllstandshöhe, die durch den Kondensatüberlauf 40a gegeben ist.

Der Gasstrom durchströmt den Teil-Kondensatkühler 10 mäanderförmig waagrecht und wird temperaturmäßig praktisch vollständig an die Badtemperatur angeglichen. Der restliche Überschuß an Wasser sammelt sich ebenfalls am Boden des Teil-Kondensatkühlers 10. Nach Durchströmen des Teil-Kondensatkühlers 10 strömt das Gas über die Verbindungsleitung 40 in den Teil-Kondensatkühlers 20. Weiters fließt ab einem bestimmten Kondensatstand im ersten Teil-Kondensatkühlers 10 das Kondensat über die gleiche Verbindungsleitung 40 in den zweiten Teil-Kondensatkühler 20 und bedeckt dort ebenfalls den Boden.

Der Gastrom durchströmt den zweiten Teil-Kondensatkühler 20 in gleicher Weise wie im ersten Teil-Kondensatkühler 10 und tritt über die Austrittsleitung 70 aus dem Kondensatkühler 4 aus. An diesem Punkt hat das Gas eine Taupunkttemperatur entsprechend $t_1$ bei einem Gasdruck $p_1$.

Im Normalfall wird man immer nur den zweiten Teil-Kondensatkühler 20 entleeren. Der Wasserstand im ersten Teil-Kondensatkühler 10 entspricht dann immer dem durch den Überlauf 40a gegebenen maximalen Wasserstand. Im zweiten Teil-Kondensatkühler 20 hat man minimal den Kondensatstand, der durch die Position der Entleerungsleitung 20b gegeben ist. Im Betrieb kann man aber ohne Beeinträchtigung der Taupunktdarstellung einen Kondensatstand bis etwa zur halben Höhe des Teil-Kondensatkühler zulassen, was bei der in den Figuren gezeigten Konstruktion etwa 200 ml Kondensatmenge entspricht.

Unter diesen Bedingungen kann die erfindungsgemäße Vorrichtung zur Erzeugung von Referenzfeuchten im mittleren Taupunktbereich ($t_d$ < 70°) bei einem Gasstrom von 5 l/min zwischen einigen Stunden bis zu einer Woche kontinuierlich betrieben werden. Im Extremfall beträgt die Betriebsdauer bei einem Gasstrom von 5 l/min und einem Taupunkt von 90°C ca. eine Stunde, was aber für eine Messung ausreicht. In diesem Fall kann man durch rechtzeitiges Entleeren des Teil-Kondensatkühlers 10 die Standzeit noch erhöhen.

Mit dem selben Kondensatkühler 4 kann man darüberhinaus auch eine Feuchtedarstellung über Eis realisieren. In diesem Fall sorgt man für einen Kondensatstand im ersten Teil-Kondensatkühler 10 entsprechend dem Überlauf 40a. Im zweiten Teil-Kondensatkühler 20 2 sorgt man für einen vergleichbaren Kondensatstand entweder durch entsprechenden Betrieb oder auch durch direkte Befüllung des zweiten Teil-Kondensatkühlers 20 über die Entleerungsleitung 20b mit Reinstwasser.

Anschließend wird der Kondensatkühler 4 nur mehr mit trockener Luft oder $N_2$ betrieben und die Badtemperatur gleichzeitig unter 0°C, idealerweise bis zumindest -15°C abgesenkt. Das Wasser in den Teil-Kondensatkühlern 10, 20 gefriert und bildet eine kompakte Eisschicht. Die trockene Luft (Taupunkttemperatur « Badtemperatur $t_1$) wird über der Eisschicht durch Sublimation entsprechend dem Sättigungsdampfdruck über Eis befeuchtet (Sonntag[1]).

Das Eis in den beiden Teil-Kondensatkühlern 10, 20 wird zur Befeuchtung verbraucht. Bei einem Verbrauch an Eis von - 100 g (Befüllung der Kondensatoren ist mit obigem Beispiel ca. 300 g) beträgt die Standzeit des Systems bei einem Gastrom von 5 l/min und einem Taupunkt von -20°C mehr als 300 Stunden.

Sinnvoll ist diese Art von Betrieb lediglich für Taupunkttemperaturen $t_d$ < - 20°C , für höhere Temperaturen ist es sinnvoller die Feuchtedarstellung über Wasser durchzuführen. Es gibt aber einen Bereich, in dem beide Methoden durchgeführt werden können und so die Funktionsweise des Systems überprüft werden kann. Bei entsprechenden Untersuchungen im Taupunktbereich von -10°C bis -25°C konnte im Rahmen der Messunsicherheit kein Unterschied in den beiden Betriebsarten nachgewiesen werden.

Bei einer Badtemperatur von -40°C und einem Druck $p_1$ = 6715 hPa bei einem Umgebungsdruck von 990 hPa kann auf diese Art ein Taupunkt von -60°C erreicht werden.

Mit einer Badtemperatur unter -40°C kann der Taupunkt noch weiter abgesenkt werden. Realisierbar

ist bei $t_1$= -70°C und $p_1$ = 12215 hPa ein Taupunkt von -90°C.

Wie bereits oben erwähnt stellt die in den Figuren 2, 3, 4a und 4b dargestellte Ausführungsform eines Kondensatkühlers 4 in einer erfindungsgemäßen Vorrichtung nur eine mögliche Variante dar. Entsprechend der Anforderungen an das System (Kühlleistung, Einsatzbereich, Gasstrom), können die Maße und Materialien an die Anforderungen jederzeit geeignet angepasst werden.

Literatur:

[1] Sonntag D. : Important New Values of the Physical Constants of 1986, Vapour Pressure Formulations based on the ITS-90 and Psychrometer Formulae ; Z.Meteorol.70 (1990) 5, 340-344

[2] B.Hardy : ITS-90 Formulations for Vapour Pressure, Frostpoint Temperature, Dewpoint Temperature and Enhancement Factors in the Range - 100 to 100 C ; Third International Symposium on Humidity and Moisture (1998) 214 - 221

[3] Greenspan L. : Functional Equations for Enhancement Factors for $CO_2$-Free Moist Air ; J.Research NBS, A.Physics and Chemistry 80A (1976) 41-44

**Patentansprüche**

1. Vorrichtung zur Erzeugung von Referenzfeuchten, bestehend aus einer Sättigerkammer (3), einem nachgeordneten Kondensatkühler (4) und einer mit dem Kondensatkühler (4) verbundenen Messkammer (7), in der eine gewünschte Referenzfeuchte durch Variation von Drücken und/oder Temperaturen definiert einstellbar ist, **dadurch gekennzeichnet, dass** der Kondensatkühler (4) als Lamellenkondensator ausgebildet ist, dessen Anordnung derart gewählt ist, dass eine im wesentlichen waagrechte Gasströmung durch denselben resultiert.

2. Vorrichtung nach Anspruch 1, **dadurch gekennzeichnet, dass** der Lamellenkondensator derart ausgebildet ist, dass eine mäanderförmige Gasführung des durchströmenden Gases resultiert

3. Vorrichtung nach Anspruch 1, **dadurch gekennzeichnet, dass** der Lamellenkondensator derart ausgebildet ist, dass eine spiralförmige Gasführung des durchströmenden Gases resultiert

4. Vorrichtung nach Anspruch 1, **dadurch gekennzeichnet, dass** der Kondensatkühler aus zwei in Serie geschalteten Teil-Kondensatkühlern (10, 20) besteht, die jeweils als Lamellenkondensatoren ausgebildet sind.

5. Vorrichtung nach Anspruch 5, **dadurch gekennzeichnet, dass** die beiden Teil-Kondensatkühler (10, 20) übereinander angeordnet sind.

6. Vorrichtung nach Anspruch 5, **dadurch gekennzeichnet, dass** vor dem ersten Teil-Kondensatkühler (10) ein Vorkondensator (60) angeordnet ist.

7. Vorrichtung nach Anspruch 6, **dadurch gekennzeichnet, dass** der Vorkondensator (60) als abwärtslaufende Rohrwendel ausgebildet ist.

8. Vorrichtung nach Anspruch 5, **dadurch gekennzeichnet, dass** die beiden Teil-Kondensatkühler (10, 20) über eine dazwischen angeordnete Verbindungsleitung (40) miteinander verbunden sind.

9. Vorrichtung nach Anspruch 8, **dadurch gekennzeichnet, dass** die Verbindungsleitung (40) im oberen Teil-Kondensatkühler (10) einen definierten Kondensatüberlauf (40a) aufweist.

10. Vorrichtung nach Anspruch 1, **dadurch gekennzeichnet, dass** der Lamellenkondensator aus einem Block eines inerten Material gefertigt ist.

11. Vorrichtung nach Anspruch 10, **dadurch gekennzeichnet, dass** der Block des Lamellenkondensators am Boden durch einen Flansch abgedichtet ist.

12. Vorrichtung nach Anspruch 1, **dadurch gekennzeichnet, dass** die flächigen Lamellen des Lamellenkondensators senkrecht zur Gasströmung angeordnet sind.

13. Vorrichtung nach Anspruch 5, **dadurch gekennzeichnet, dass** jeder Teil-Kondensatkühler (10, 20) mit einer Entleerungsleitung (10b, 20b) verbunden ist.

**Claims**

1. Device for the generation of relative humidity references, comprising a saturator chamber (3), a condenser (4) arranged downstream and a measurement chamber (7), which is connected to the condenser (4) and in which a desired relative humidity reference is adjustable in a defined manner by varying pressures and/or temperatures, **characterised in that** the condenser (4) is configured as a lamellar condenser, the arrangement of which is selected so that there results a substantially horizontal gas flow through it.

2. Device according to Claim 1, **characterised in that** the lamellar condenser is configured so that there results a meander-type gas distribution of the gas flowing through it.

3. Device according to Claim 1, **characterised in that** the lamellar condenser is configured so that there results a spiral-shaped gas distribution of the gas flowing through it.

4. Device according to Claim 1, **characterised in that** the condenser consists of two component condensers (10, 20) connected in series and respectively configured as lamellar condensers.

5. Device according to Claim 5, **characterised in that** the two component condensers (10, 20) are arranged one above the other.

6. Device according to Claim 5, **characterised in that** a precondenser (60) is arranged in front of the first component condenser (10).

7. Device according to Claim 6, **characterised in that** the precondenser (60) is configured as a downward-running helical tube.

8. Device according to claim 5, **characterised in that** the two component condensers (10, 20) are connected to one another by means of a connection conduit (40).

9. Device according to Claim 8, **characterised in that** the connection conduit (40) has a defined condensate overflow (40a) in the upper component condenser (10).

10. Device according to Claim 1, **characterised in that** the lamellar condenser is made from a block of an inert material.

11. Device according to Claim 10, **characterised in that** the block of the lamellar condenser is sealed by a flange at the base.

12. Device according to Claim 1, **characterised in that** the plane plates of the lamellar condenser are arranged perpendicular to the gas flow.

13. Device according to Claim 5, **characterised in that** each component condenser (10, 20) is connected to an outflow conduit (10b, 20b).

**Revendications**

1. Dispositif de génération d'humidités de référence, constitué d'une chambre de saturateur (3), d'un refroidisseur de condensat (4) placé à la suite et d'une chambre de mesure (7) qui est reliée au refroidisseur de condensat (4) et dans laquelle une humidité de référence souhaitée peut être réglée par variation de pressions et/ou de températures, **caractérisé par le fait que** le refroidisseur de condensat (4) est réalisé sous forme de condenseur à lamelles, dont l'agencement est choisi tel qu'il en résulte un écoulement sensiblement horizontal du gaz à travers ce refroidisseur.

2. Dispositif selon la revendication 1, **caractérisé par le fait que** le condenseur à lamelles est agencé de manière telle qu'il en résulte un passage en méandres du gaz qui le traverse.

3. Dispositif selon la revendication 1, **caractérisé par le fait que** le condenseur à lamelles est agencé de manière telle qu'il en résulte un passage en spirale du gaz qui le traverse.

4. Dispositif selon la revendication 1, **caractérisé par le fait que** le refroidisseur de condensat se compose de refroidisseurs élémentaires (10, 20) qui sont montés en série et sont chacun réalisés sous forme de condenseur à lamelles.

5. Dispositif selon la revendication 4, **caractérisé par le fait que** les deux refroidisseurs de condensat élémentaires (10, 20) sont disposés l'un au-dessus de l'autre.

6. Dispositif selon la revendication 5, **caractérisé par le fait qu'**un pré-condenseur (60) est disposé en amont du premier refroidisseur de condensat élémentaire (10).

7. Dispositif selon la revendication 6, **caractérisé par le fait que** le pré-condenseur (60) est réalisé sous la forme d'un serpentin tubulaire descendant.

8. Dispositif selon la revendication 5, **caractérisé par le fait que** les deux refroidisseurs de condensat élémentaires (10, 20) sont reliés par une conduite de liaison (40) disposée entre eux.

9. Dispositif selon la revendication 8, **caractérisé par le fait que** la conduite de liaison (40) dans le refroidisseur de condensat élémentaire (10) présente une décharge de condensat (40a) définie.

10. Dispositif selon la revendication 1, **caractérisé par le fait que** le condenseur à lamelles est réalisé à partir d'un bloc d'un matériau inerte.

**EP 1 624 356 B1**

**11.** Dispositif selon la revendication 10, **caractérisé par le fait que** le bloc du condenseur à lamelles est rendu étanche au niveau du fond par une plaque.

**12.** Dispositif selon la revendication 1, **caractérisé par le fait que** les lamelles planes du condenseur à lamelles sont disposées perpendiculairement à l'écoulement du gaz.

**13.** Dispositif selon la revendication 5, **caractérisé par le fait que** chaque refroidisseur de condensat élémentaire (10, 20) est relié à une conduite de vidange (10b, 20b).

FIG. 1

FIG. 2

FIG. 3

## FIG. 4a

10

## FIG. 4b

20